# EUROPEAN PATENT APPLICATION

(11) **EP 3 506 540 A1**
(43) Date of publication of application: **03.07.2019**
(21) Application number: 16917135.2
(22) Date of filing: 28.09.2016
(51) Int. Cl.: H04L 1/18

(54) **DATA TRANSMISSION METHOD, NETWORK DEVICE AND TERMINAL DEVICE**

(71) Applicant: Huawei Technologies Co., Ltd., Longgang District Shenzhen, Guangdong 518129 (CN)
(72) Inventor: LIN, Nizhong, Shenzhen Guangdong 518129 (CN); PANG, Lingli, Shenzhen Guangdong 518129 (CN); ZHENG, Xiaoxiao, Shenzhen Guangdong 518129 (CN); SHI, Xianwen, Shenzhen Guangdong 518129 (CN)
(74) Representative: Pfenning, Meinig & Partner mbB
(86) International application number: PCT/CN2016/100619
(87) International publication number: WO 2018/058380

(57) **Abstract**

A data transmission method, a network device, and a terminal device are disclosed. The network device determines activation instruction information, where the activation instruction information is used to instruct to enable or disable a transmission control protocol (TCP) quick acknowledgement function. The network device sends the activation instruction information, and if the activation instruction information instructs to enable the TCP quick acknowledgement function, maintains a mapping relationship between a TCP sequence number and a radio link control layer protocol data unit (RLC PDU) sequence number. The terminal device receives the activation instruction information, and enables or disables the TCP quick acknowledgement function according to the activation instruction information, thereby optimizing a data transmission method using a TCP quick acknowledgement scheme.

## Description

### TECHNICAL FIELD

The present invention relates to the field of communications technologies, and in particular, to a data transmission method, a network device, and a terminal device.

### BACKGROUND

During wireless data transmission, a network device and a terminal device generally comply with a layered data transmission model including an application layer, a transmission control protocol (Transfer Control Protocol, TCP) layer, an Internet Protocol (Internet Protocol, IP) layer, a Packet Data Convergence Protocol (Packet Data Convergence Protocol, PDCP) layer, a Radio Link Control (Radio Link Control, RLC) layer, a MAC (Media Access Control, Media Access Control) layer, and a physical (Physical, PHY) layer. When the network device sends data to the terminal device, the data leaves an application layer of the network device, goes through a TCP layer, an IP layer, a PDCP layer, an RLC layer, a MAC layer, and a PHY layer of the network device, reaches a PHY layer of the terminal device over a transmission link, goes through a MAC layer, an RLC layer, a PDCP layer, an IP layer, and a TCP layer of the terminal device, and eventually reaches an application layer of the terminal device and vice versa.

A received data acknowledgement mechanism such as TCP layer acknowledgement and RLC layer acknowledgement is introduced in data transmission to avoid data loss or a data error during transmission. The TCP layer acknowledgement is to ensure accuracy of transmitting a TCP data packet. Acknowledgement in an RLC layer acknowledged mode (Acknowledged Mode, AM) is to ensure accuracy of receiving a data packet at an RLC layer.

The RLC-AM mode is used in a transmission of a data packet once. Both an RLC layer and a TCP layer of a data receiving end may send an acknowledgement packet, and reception of a TCP acknowledgement packet may further trigger another time of transmission of an RLC acknowledgement packet. During transmission of a single data packet, especially, during transmission of a single small data packet, one data packet in the application layer corresponds to acknowledgement packets of a maximum of three air interfaces (Air Interface, air interfaces, that is, an interface between a mobile terminal and a base station). When a single TCP acknowledgement packet appears, a data packet is relatively large, resulting in a waste of air interface resources, and a large quantity of acknowledgement packets cause interference to other communication data. To avoid the problem, a TCP quick acknowledgement scheme emerges. In the TCP quick acknowledgement scheme, RLC layer acknowledgement is used to replace TCP layer acknowledgement, so that a quantity of TCP ACK data packets is reduced. Specifically, a data transmitting end maintains a mapping relationship between a TCP acknowledgement number and an RLC protocol data unit (Protocol Data Unit, PDU). If the data transmitting end receives an acknowledgement (ACKnowledge, ACK) of an RLC service data unit (Service Data Units, SDU) corresponding to a TCP data packet, it is determined that the TCP data packet is sent successfully and a TCP ACK data packet is constructed. The data receiving end blocks the generated TCP ACK data packet, so that data receiving end does not need to send the TCP ACK data packet to the data transmitting end.

Currently, although a data transmission method using the TCP quick acknowledgement scheme can avoid a waste of air interface resources, some disadvantages exist and there is room for optimization. For example, the network device needs to maintain a mapping relationship between a TCP acknowledgement number and an RLC PDU for each TCP data flow in a TCP link established by the terminal device and processing overheads of the network device are inevitably increased.

### SUMMARY

Embodiments of the present invention provide a data transmission method, a network device, and a terminal device, thereby optimizing a data transmission method using a TCP quick acknowledgement scheme.

According to a first aspect, a data transmission method is provided. In the method, a network device determines and sends activation instruction information used to instruct to enable or disable a TCP quick acknowledgement function. A terminal device receives the activation instruction information, and enables or disables the TCP quick acknowledgement function according to the activation instruction information. If the determined activation instruction information is to enable the TCP quick acknowledgement function, the network device maintains a mapping relationship between a TCP sequence number and an RLC PDU sequence number, to implement a TCP quick acknowledgement scheme.

The TCP quick acknowledgement function is a function that the network device and the terminal device support data transmission using the TCP quick acknowledgement scheme. The TCP quick acknowledgement scheme is a data transmission solution that the network device constructs a TCP ACK data packet based on a maintained mapping relationship between a TCP acknowledgement number and an RLC PDU and a received RLC ACK data packet and the terminal device selectively discards a TCP ACK data packet.

The activation instruction information may be used to enable or disable a TCP quick acknowledgement function of at least one radio bearer or used to enable or disable a TCP quick acknowledgement function of at least one TCP link.

The activation instruction information may be sent or received by using at least one or a combination of an RRC message, a broadcast message, a MAC CE, and physical layer signaling.

In the embodiments of the present invention, the network device sends the activation instruction information for enabling or disabling the TCP quick acknowledgement function to the terminal device, to enable the terminal device to dynamically enable or disable the TCP quick acknowledgement function, so that the TCP quick acknowledgement function can be enabled when the TCP quick acknowledgement scheme needs to be used, and the TCP quick acknowledgement function can be disabled when the TCP quick acknowledgement scheme does not need to be used, thereby optimizing a data transmission method using the TCP quick acknowledgement scheme.

In a possible design, the network device may determine, based on any one or a combination of the following conditions, that the TCP quick acknowledgement scheme needs to be enabled, and determine the activation instruction information used to instruct to enable the TCP quick acknowledgement function:
A: The network device determines that an uplink transmission rate of the terminal device is less than a specified first threshold.
B: The network device has a computing processing capability supporting the TCP quick acknowledgement function.
C: The terminal device has not enabled a hotspot sharing function.
D: A TCP link of the terminal device does not support TCP link capability information. The TCP link capability information includes selective acknowledgement capability information, duplicate acknowledgement capability information, timestamp capability information or the like.
E: The terminal device is in a TCP link setup process.
F: The terminal device uses subscription information in a core network to indicate that the terminal device supports the TCP quick acknowledgement function.
G: The network device determines that a probability that a TCP data packet sent to the terminal device is a TCP retransmission data packet is greater than a specified second threshold.

The probability that the TCP data packet is a TCP retransmission data packet may be determined by using a ratio of a quantity of TCP retransmission data packets in all TCP connections corresponding to the terminal device to a total quantity of TCP data packets.

In a possible design, the network device may recognize the TCP retransmission data packet by using one or a combination of the following manners.

First manner: If the network device determines that a disordered TCP sequence number exists in maintained TCP sequence numbers, it is determined that a TCP data packet corresponding to the disordered TCP sequence number is a TCP retransmission data packet, where the maintained TCP sequence numbers are TCP sequence numbers of TCP data packets that are sent by the network device to the terminal device and that are in each TCP link.

Second manner: If the network device receives TCP acknowledgement data packets whose quantity is greater than or equal to a specified quantity and that include same TCP acknowledgement numbers, it is determined that TCP data packets corresponding to the same TCP acknowledgement numbers are TCP retransmission data packets. The specified quantity may be 4.

In a possible design, the network device may determine, based on any one or a combination of the following conditions, that the TCP quick acknowledgement scheme does not need to be used, and determine the activation instruction information used to instruct to disable the TCP quick acknowledgement function:
A: The network device determines that an uplink transmission rate of sending data by a terminal device is greater than a specified third threshold.
B: The network device does not have a computing processing capability supporting the TCP quick acknowledgement function.
C: The terminal device has enabled a hotspot sharing function.
D: A TCP link of the terminal device is broken.
E: The terminal device has left a current cell or base station.
F: A TCP link established by the terminal device supports TCP link capability information. The TCP link capability information includes selective acknowledgement capability information, duplicate acknowledgement capability information, or timestamp capability information.

In another possible design, in the embodiments of the present invention, if the determined activation instruction information is to disable the TCP quick acknowledgement function, the network device stops maintaining the mapping relationship between a TCP sequence number and an RLC PDU sequence number, thereby reducing processing overheads of the network device.

In still another possible design, the mapping relationship maintained by the network device further includes, in addition to a TCP sequence number and an RLC PDU sequence number, at least one of the following: a port number of a transmit end of a TCP data packet, a port number of a receive end of the TCP data packet, an IP address of the transmit end of the TCP data packet, an IP address of the receive end of the TCP data packet, and a length of a TCP packet.

In still another possible design, the network device may obtain TCP link capability information of the terminal device. The TCP link capability information is used to determine the activation instruction information, or used to construct a TCP acknowledgement data packet if the activation instruction information instructs to enable the TCP quick acknowledgement function.

The network device may obtain the TCP link capability information by parsing a TCP link setup packet used when the terminal device establishes a TCP link, or the terminal device may send the TCP link capability information of the terminal device to the network device.

In still another possible design, if it is determined that a TCP acknowledgement number in a TCP acknowledgement data packet sent by the terminal device is greater than or equal to a minimum TCP sequence number maintained in the mapping relationship, the network device may send the activation instruction information, to determine a correctly received TCP data packet.

According to a second aspect, a network device is provided. The network device has a function of implementing the foregoing network device in the designs of the first aspect. The function may be implemented by using hardware, or may be implemented by using hardware executing corresponding software. The hardware or software includes one or more modules corresponding to the foregoing functions. The modules may be software and/or hardware.

In a possible design, the network device includes a processing unit and a sending unit. The processing unit is configured to: determine activation instruction information, where the activation instruction information is used to instruct to enable or disable a transmission control protocol (TCP) quick acknowledgement function, and if the activation instruction information instructs to enable the TCP quick acknowledgement function, maintain a mapping relationship between a TCP sequence number and a radio link control layer protocol data unit (RLC PDU) sequence number. The sending unit is configured to send the activation instruction information determined by the processing unit.

The processing unit determines, if it is determined that any one or a combination of the following cases exists, the activation instruction information used to instruct to enable the TCP quick acknowledgement function:
it is determined that an uplink transmission rate of a terminal device is less than a specified first threshold; the network device has a computing processing capability supporting the TCP quick acknowledgement function; the terminal device has not enabled a hotspot sharing function; a TCP link of the terminal device does not support TCP link capability information, where the TCP link capability information includes selective acknowledgement capability information, duplicate acknowledgement capability information, or timestamp capability information; the terminal device is in a TCP link setup process; the terminal device uses subscription information in a core network to indicate that the terminal device supports the TCP quick acknowledgement function; and it is determined that a probability that a TCP data packet sent to the terminal device is a TCP retransmission data packet is greater than a specified second threshold.

The processing unit determines, if it is determined that any one or a combination of the following cases exists, the activation instruction information used to instruct to disable the TCP quick acknowledgement function:
it is determined that an uplink transmission rate of sending data by a terminal device is greater than a specified third threshold; the network device does not have a computing processing capability supporting the TCP quick acknowledgement function; the terminal device has enabled a hotspot sharing function; a TCP link of the terminal device is broken; the terminal device has left a source cell or a source base station; and a TCP link established by the terminal device supports TCP link capability information, where the TCP link capability information includes selective acknowledgement capability information, duplicate acknowledgement capability information, or timestamp capability information.

The processing unit is further configured to: recognize the TCP retransmission data packet before it is determined that the probability that the TCP data packet sent to the terminal device is a TCP retransmission data packet is greater than the specified third threshold, where if it is determined that a disordered TCP sequence number exists in maintained TCP sequence numbers, it is determined that a TCP data packet corresponding to the disordered TCP sequence number is a TCP retransmission data packet, where the maintained TCP sequence numbers are TCP sequence numbers of TCP data packets that are sent by the network device to the terminal device and that are in each TCP link; or, if it is determined that the network device receives TCP acknowledgement data packets whose quantity is greater than or equal to a specified quantity and that include same TCP acknowledgement numbers, it is determined that TCP data packets corresponding to the same TCP acknowledgement numbers are TCP retransmission data packets.

The network device further includes a receiving unit. The receiving unit is configured to obtain TCP link capability information of the terminal device, where the TCP link capability information is used to determine the activation instruction information, or used to construct a TCP acknowledgement data packet if the activation instruction information instructs to enable the TCP quick acknowledgement function.

The receiving unit may obtain the TCP link capability information in the following manners:
the TCP link capability information sent by the terminal device is received; or the TCP link capability information is obtained by using a TCP link setup packet used when the terminal device establishes a TCP link.

The processing unit is further configured to: before the sending unit sends the activation instruction information, determine that a TCP acknowledgement number in a TCP acknowledgement data packet sent by the terminal device is greater than or equal to a minimum TCP sequence number maintained in the mapping relationship.

If the activation instruction information instructs to enable the TCP quick acknowledgement function, the mapping relationship maintained by the network device further includes at least one of the following: a port number of a transmit end of a TCP data packet, a port number of a receive end of the TCP data packet, an IP address of the transmit end of the TCP data packet, an IP address of the receive end of the TCP data packet, and a length of a TCP packet.

The activation instruction information is used to enable or disable a TCP quick acknowledgement function of at least one radio bearer; or the activation instruction information is used to enable or disable a TCP quick acknowledgement function of at least one TCP link.

The sending unit sends the activation instruction information by using at least one or a combination of an RRC message, a broadcast message, a MAC CE, and physical layer signaling.

In another possible design, the processing unit included in the network device may be a processor, and the sending unit may be a transmitter. The processor is configured to support the network device in executing the functions of the foregoing network device used in the first aspect. The transmitter is configured to support the network device in executing a function of transmitting the determined activation instruction information. The network device may further include a memory. The memory is configured to couple to the processor and store a necessary program instruction and necessary data of the network device.

The network device may further include a receiver, and the receiver is configured to support the network device in obtaining TCP link capability information of the terminal device.

According to a third aspect, a terminal device is provided. The terminal device has a function of implementing the foregoing terminal device in the designs of the first aspect. The function may be implemented by using hardware, or may be implemented by using hardware executing corresponding software. The hardware or software includes one or more modules corresponding to the foregoing function. The modules may be software and/or hardware.

In a possible design, the terminal device includes a receiving unit and a processing unit. The receiving unit is configured to receive activation instruction information sent by a network device, where the activation instruction information is used to instruct to enable or disable a transmission control protocol (TCP) quick acknowledgement function. The processing unit is configured to enable or disable the TCP quick acknowledgement function according to the activation instruction information received by the receiving unit.

The terminal device further includes a sending unit. The sending unit is configured to: after the receiving unit receives the activation instruction information sent by the network device, if the processing unit determines, according to the activation instruction information, to enable the TCP quick acknowledgement function, send TCP link capability information to the network device. The TCP link capability information includes selective acknowledgement capability information, duplicate acknowledgement capability information, or timestamp capability information.

The receiving unit receives, by using at least one or a combination of an RRC message, a broadcast message, a MAC CE, and physical layer signaling, the activation instruction information sent by the network device.

The activation instruction information is used to enable or disable a TCP quick acknowledgement function of at least one radio bearer; or the activation instruction information is used to enable or disable a TCP quick acknowledgement function of at least one TCP link.

In another possible design, the receiving unit included in the terminal device may be a receiver, and the processing unit included in the terminal device may be a processor. The receiver is configured to support the terminal device in receiving the activation instruction information transmitted by the network device. The processor is configured to support the terminal device in executing the functions of the foregoing terminal device used in the first aspect. The terminal device may further include a memory. The memory is configured to couple to the processor and the memory stores a necessary program instruction and necessary data of the terminal device.

The terminal device may further include a transmitter. The transmitter is configured to support the terminal device in sending TCP link capability information to the network device.

### BRIEF DESCRIPTION OF DRAWINGS

FIG. 1 is an architectural diagram of a system to which a data transmission method is applied according to an embodiment of the present invention;
FIG. 2 is a schematic diagram of a downlink data transmission process when an application server and a terminal device exchange data according to an embodiment of the present invention;
FIG. 3 is a schematic flowchart of a data transmission method using a TCP quick acknowledgement scheme according to an embodiment of the present invention;
FIG. 4 is a flowchart of a data transmission method according to an embodiment of the present invention;
FIG. 5 is a flowchart of a data transmission method with a TCP quick acknowledgement function enabled according to an embodiment of the present invention;
FIG. 6 is a flowchart of a data transmission method with a TCP quick acknowledgement function disabled according to an embodiment of the present invention;
FIG. 7A and FIG. 7B are schematic structural diagrams of a network device according to an embodiment of the present invention;
FIG. 8 is another schematic structural diagram of a network device according to an embodiment of the present invention; and
FIG. 9A and FIG. 9B are schematic structural diagrams of a terminal device according to an embodiment of the present invention; and
FIG. 10 is a schematic structural diagram of a terminal device according to an embodiment of the present invention.

### DESCRIPTION OF EMBODIMENTS

The following describes in detail the technical solutions in the embodiments of the present invention with reference to the accompanying drawings in the embodiments of the present invention. Apparently, the described embodiments are some rather than all of the embodiments of the present invention.

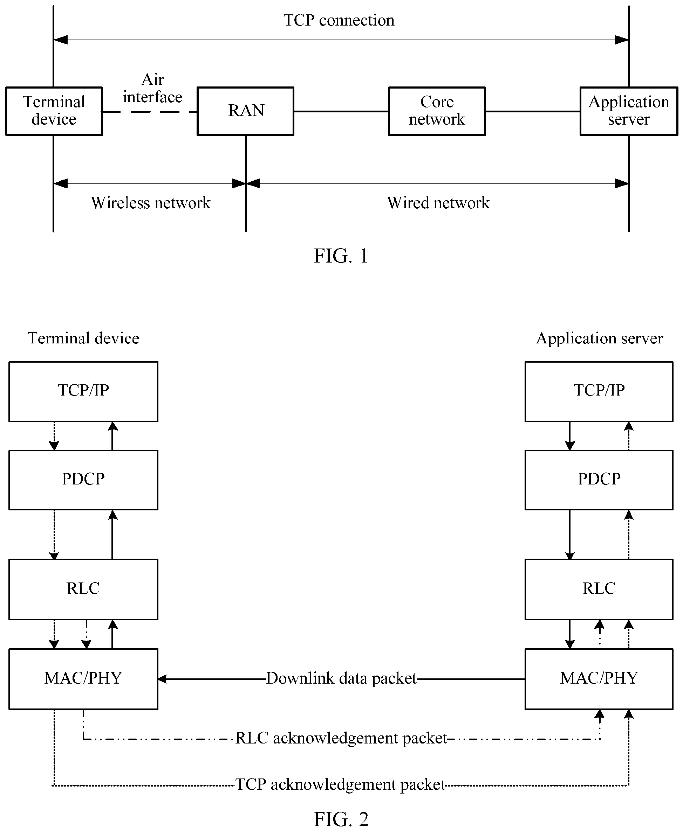

A data transmission method provided in the embodiments of the present invention may be applied to data transmission in a wireless communications system. A data receiving end and a data transmitting end exchange data by using a radio access network (Radio Access Network, RAN) and a core network. A TCP connection may further be established between the data receiving end and the data transmitting end, and a TCP protocol is used to perform data transmission. For example, as shown in FIG. 1, in the wireless communications system, a terminal and an application server exchange data. A terminal device is connected to the RAN by using an air interface and is connected to the application server by using the core network. A network between the terminal device and the RAN may be referred to as a wireless network, and a network between the RAN and the application server may be referred to as a wired network. The application server and the terminal device establish a TCP connection and perform data transmission.

FIG. 2 is a schematic diagram of a downlink data transmission process when an application server and a terminal device exchange data. In FIG. 2, an RLC ACK data packet and a TCP ACK data packet exist when a TCP mode is used at a transmission layer and an RLC-AM mode is used at an RLC layer.

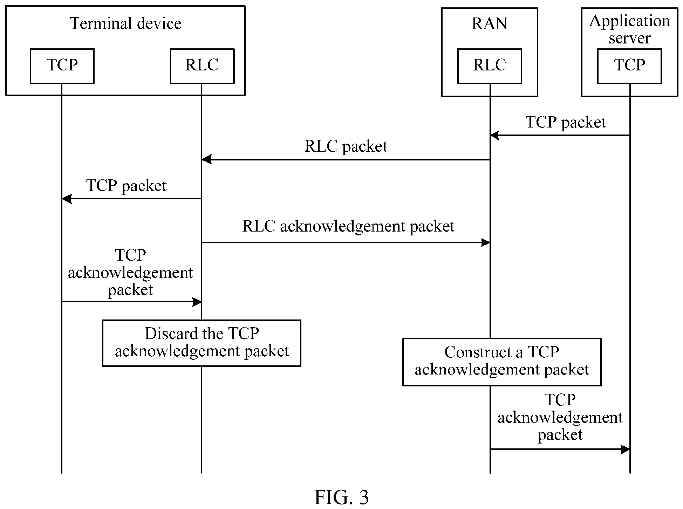

A TCP ACK data packet is relatively large and usually has a size greater than or equal to 40 bytes. As a result, a round trip time (Round Trip Time, RTT) of a TCP data packet is extended in a weak coverage area. Therefore, a TCP quick acknowledgement scheme shown in FIG. 3 may be used at present. As shown in FIG. 3, in the TCP quick acknowledgement scheme, a TCP protocol entity unit of the application server sends a TCP data packet to an RLC protocol entity unit on an RAN side. The RLC protocol entity unit on the RAN side obtains the TCP data packet in a form of an RLC service data unit (Service Data Unit, SDU), processes the RLC SDU into a data packet of the RLC layer, and sends the data packet to an RLC protocol entity unit of the terminal device. The RLC protocol entity unit of the terminal device obtains an RLC PDU corresponding to the TCP data packet and sends the RLC PDU to a TCP protocol entity unit of the terminal device. The TCP protocol entity unit of the terminal device and the RLC protocol entity unit determine whether a TCP/IP data packet is correctly received. If the TCP/IP data packet is correctly received, the RLC protocol entity unit of the terminal device feeds back an RLC ACK data packet. The TCP protocol entity unit of the terminal device feeds back a TCP ACK data packet. To reduce a quantity of times of transmitting TCP ACK data packets through an air interface (especially, in downlink TCP data transmission, when uplink coverage is relatively weak, the TCP ACK data packet may need to be retransmitted several times because a TCP ACK data packet is relatively large), and the RLC protocol entity unit on the RAN side may construct a TCP ACK data packet and send the TCP ACK data packet to the TCP protocol entity unit of the application server. The RLC protocol entity unit of the terminal device selectively discards a TCP ACK data packet, for example, a TCP ACK data packet other than a TCP ACK data packet having a function of exchanging TCP information between a receiver and a transmitter. The TCP ACK data packet having a function of exchanging information between a TCP receiver and a TCP transmitter may be, for example, a data packet that includes information about timestamp exchange, adjustment of a size of a receive/send window, and the like, so that the TCP protocol entity unit of the application server may determine that the sent TCP data packet is correctly received without waiting till a TCP ACK data packet sent by the TCP protocol entity unit of the terminal device is received, thereby shortening an RTT for sending and receiving a TCP data packet and improving a TCP throughput.

Currently, when the TCP quick acknowledgement scheme shown in FIG. 3 is used, an RLC protocol entity (for example, a network device) on the RAN side needs to maintain a mapping relationship between a TCP sequence number and an RLC PDU sequence number to determine, based on an RLC acknowledgement data packet, whether a TCP data packet is correctly received, determine an acknowledgement number of a TCP acknowledgement data packet that needs to be constructed, and construct a TCP acknowledgement data packet based on the acknowledgement number of the TCP acknowledgement data packet. The maintenance of a mapping relationship is to store the mapping relationship and perform communication processing based on the mapping relationship. A TCP sequence number in the mapping relationship is a sequence number of a sent TCP data packet. An RLC PDU sequence number is a sequence number corresponding to an RLC PDU generated after a TCP data packet corresponding to the TCP sequence number is processed at a PDCP layer and an RLC layer, and one or more RLC PDUs may be generated.

However, the network device maintains a mapping relationship between a TCP acknowledgement number and an RLC PDU for each TCP data flow in a TCP link established by the terminal device, and processing overheads of the network device are inevitably increased. When a processing capability of the network device is insufficient, normal communication may be affected if a TCP quick acknowledgement function is not disabled. In addition, the solution for reducing a quantity of TCP ACK data packets has a relatively significant gain when the terminal device is located in a weak coverage area, and it may be considered to use the TCP quick acknowledgement scheme when the terminal device is located in a weak coverage area. Therefore, the embodiments of the present invention provide an implementation solution that can instruct the terminal device to enable or disable the TCP quick acknowledgement function, thereby further optimizing a data transmission method using the TCP quick acknowledgement scheme.

It should be noted that the terminal device used in the embodiments of the present invention may include various handheld devices, in-vehicle devices, wearable devices, and computing devices having a wireless communication function, other processing devices connected to a wireless modem, and user equipments (User Equipment, UE), mobile stations (Mobile station, MS), terminal equipments (Terminal Equipment), and the like in various forms. The network device may include various apparatuses that provide a terminal device with a communication function in a radio access network and may be, for example, a base station. The base station may include macro base stations, micro base stations, relay stations, access points, and the like in various forms. In a system using different wireless access technologies, a base station may have different names, and is, for example, referred to as an evolved node B (evolved NodeB, eNB or eNodeB for short) in a Long Term Evolution (Long Term Evolution, LTE) network, and referred to as a node B (Node B) in a third generation 3G network.

The data transmission method described in the embodiments of the present invention may be applied to an LTE system or other wireless communications systems using various radio access technologies, for example, systems using access technologies such as code division multiple access, frequency division multiple access, time division multiple access, orthogonal frequency division multiple access, and single carrier frequency division multiple access. In addition, the method may alternatively be applicable to a subsequent evolved system, for example, a fifth generation 5G system, that uses the LTE system. For clarity, the embodiments of the present invention are described below by using only an LTE system as an example, the terminal device is UE, and the network device is an eNB.

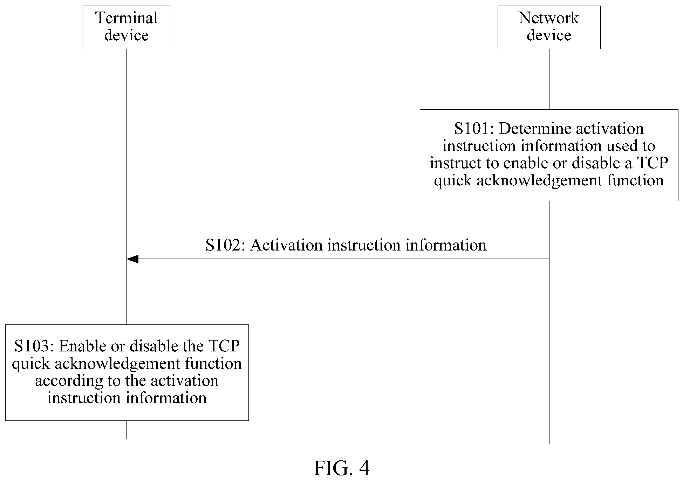

FIG. 4 is a flowchart of a data transmission method according to an embodiment of the present invention. As shown in FIG. 4, the method includes the following steps.

S101: A network device determines activation instruction information used to instruct to enable or disable a TCP quick acknowledgement function.

The TCP quick acknowledgement function in this embodiment of the present invention is a function that the network device and a terminal device support data transmission by using the TCP quick acknowledgement scheme shown in FIG. 3. The TCP quick acknowledgement scheme is a data transmission solution in which the network device constructs a TCP ACK data packet based on a maintained mapping relationship between a TCP acknowledgement number and an RLC PDU and a received RLC ACK data packet and the terminal device selectively discards a TCP ACK data packet. To enable the TCP quick acknowledgement function means that the network device and the terminal device enable the function of performing data transmission by using the TCP quick acknowledgement scheme shown in FIG. 3. To disable the TCP quick acknowledgement function means that the network device and the terminal device disable the function of performing data transmission by using the TCP quick acknowledgement scheme shown in FIG. 3.

In this embodiment of the present invention, the network device may determine, based on information such as coverage information of the terminal device and a processing capability of the network device, whether the TCP quick acknowledgement scheme needs to be used. When the network device determines that the TCP quick acknowledgement scheme needs to be used, the activation instruction information used to instruct to enable the TCP quick acknowledgement function is determined. When the network device determines that the TCP quick acknowledgement scheme used by the terminal device does not need to be enabled (needs to be disabled), the activation instruction information used to instruct to disable the TCP quick acknowledgement function is determined.

In this embodiment of the present invention, the network device may determine, based on any one or a combination of the following conditions, that the TCP quick acknowledgement scheme needs to be enabled, and determine the activation instruction information used to instruct to enable the TCP quick acknowledgement function:
A: The network device determines that an uplink transmission rate of the terminal device is less than a specified first threshold.
   The network device in this embodiment of the present invention may estimate the uplink transmission rate of the terminal device based on information such as a scheduling request (Scheduling Request, SR), a buffer status report (Buffer Status Reporting, BSR), and a power headroom report (power headroom report, PHR) reported by the terminal device and by combining channel quality information and a current scheduling algorithm, and the like of the terminal device. When the estimated uplink transmission rate is less than the specified first threshold, it is determined to use the TCP quick acknowledgement scheme, and the activation instruction information used to instruct to enable the TCP quick acknowledgement function is determined, thereby obtaining a significant gain and avoiding a waste of resources on a network side.
B: The network device has a computing processing capability supporting the TCP quick acknowledgement function.
   In this embodiment of the present invention, when the computing processing capability of the network device can support the TCP quick acknowledgement function, it means that the computing processing capability of the network device can support the network device in maintaining the mapping relationship between a TCP acknowledgement number and an RLC PDU and constructing a TCP ACK packet based on an RLC ACK. In this case, it is determined that the TCP quick acknowledgement scheme needs to be enabled, and the activation instruction information used to instruct to enable the TCP quick acknowledgement function is determined, so that it can be ensured that the network device normally maintains the mapping relationship between a TCP acknowledgement number and an RLC PDU.
C: The terminal device has not enabled a hotspot sharing function.
   If the terminal device has enabled a hotspot sharing function, the terminal device is used as a relay routing node to perform data transmission. In this case, if data delivered from an RAN side arrives at the terminal device reliably, it cannot be ensured that the data that arrives at the terminal device reliably can reach a TCP receive end reliably. Therefore, in the case, the TCP quick acknowledgement function is not usable. Therefore, in this embodiment of the present invention, if it is determined that the terminal device has not enabled a hotspot sharing function, it is determined that the TCP quick acknowledgement scheme needs to be used, and the activation instruction information used to instruct to enable the TCP quick acknowledgement function is determined.
D: A TCP link of the terminal device does not support TCP link capability information. The TCP link capability information includes selective acknowledgement capability information, duplicate acknowledgement capability information, timestamp capability information or the like. In the TCP quick acknowledgement function, when the RAN side constructs a TCP ACK data packet in place of the terminal device, some TCP link capability information, for example, the TCP link capability information such as selective acknowledgement capability information, duplicate acknowledgement capability information, and timestamp capability information, cannot be supported. Therefore, when the network device determines that the terminal device does not support the TCP link capability information, it may be determined to enable the TCP quick acknowledgement function for the terminal device.
   In this embodiment of the present invention, the network device may obtain the TCP link capability information by parsing a TCP link setup packet used when the terminal device establishes a TCP link, or by sending, by the terminal device, the TCP link capability information of the terminal device to the network device. The network device determines, by determining whether a TCP link of the terminal device supports the TCP link capability information, whether the TCP quick acknowledgement scheme needs to be used. When a TCP link of the terminal device does not support TCP link capability information such as selective acknowledgement capability information, duplicate acknowledgement capability information, and timestamp capability information, it is determined that the TCP quick acknowledgement scheme needs to be used, and the activation instruction information used to instruct to enable the TCP quick acknowledgement function is determined.
E: The terminal device is in a TCP link setup process.
   During construction of a TCP ACK data packet, it needs to be ensured that data packets before a TCP acknowledgement number are correctly received. Therefore, when it is determined that a first data packet is correctly received, it is determined that data packets before the data packet are correctly received. In this embodiment of the present invention, the terminal device is in a TCP link setup process, it is determined that the TCP quick acknowledgement scheme needs to be used, and the activation instruction information used to instruct to enable the TCP quick acknowledgement function is determined, so that when the network device maintains the mapping relationship, an execution step of listening to a TCP acknowledgement data packet from the terminal device may be omitted.
F: The terminal device uses subscription information in a core network to indicate that the terminal device supports the TCP quick acknowledgement function.
   In this embodiment of the present invention, the network device may obtain, from the core network, whether to use the TCP quick acknowledgement scheme. When the terminal device uses the subscription information in the core network to indicate that the terminal device supports the TCP quick acknowledgement function, it is determined that the TCP quick acknowledgement scheme needs to be used, and the activation instruction information used to instruct to enable the TCP quick acknowledgement function is determined. If the terminal device adds, to subscription information in the core network, that the terminal device supports the TCP quick acknowledgement function, or a level of a terminal device in subscription information of the core network supports the TCP quick acknowledgement function, it may be determined that the terminal device uses the subscription information in the core network to indicate that the terminal device supports the TCP quick acknowledgement function.
G: The network device determines that a probability that a TCP data packet sent to the terminal device is a TCP retransmission data packet is greater than a specified second threshold.

In this embodiment of the present invention, if the network device determines that the probability that the TCP data packet sent to the terminal device is a TCP retransmission data packet is greater than a specified second threshold, it may be determined that current network coverage is relatively weak. In this case, it may be determined that the TCP quick acknowledgement scheme needs to be used, and the activation instruction information used to instruct to enable the TCP quick acknowledgement function is determined.

The probability that the TCP data packet is a TCP retransmission data packet may be determined by using a ratio of a quantity of TCP retransmission data packets in all TCP connections corresponding to the terminal device to a total quantity of TCP data packets.

In this embodiment of the present invention, the network device may recognize the TCP retransmission data packet by using one or a combination of the following manners.
First manner: If the network device determines that a disordered TCP sequence number exists in maintained TCP sequence numbers, it is determined that a TCP data packet corresponding to the disordered TCP sequence number is a TCP retransmission data packet, where the maintained TCP sequence numbers are TCP sequence numbers of TCP data packets that are sent by the network device to the terminal device and that are in each TCP link.
   In this embodiment of the present invention, transmission of an uplink TCP data packet is used as an example to describe the foregoing process of recognizing a TCP retransmission data packet used in the first manner. During transmission of an uplink TCP data packet, the terminal device is a transmit end device of a TCP data packet, and an application server is a receive end device of a TCP data packet. A variable T_SN may be maintained in a PDCP layer of the terminal device. When a PDCP layer of UE receives a TCP data packet submitted by an upper layer and parses a TCP packet header of the TCP data packet to obtain a TCP sequence number SN of the TCP data packet. If SN is greater than or equal to T_SN, it is set that T_SN = SN. If SN is less than T_SN, it is determined that the TCP data packet is a TCP retransmission packet.
Second manner: If the network device receives TCP acknowledgement data packets whose quantity is greater than or equal to a specified quantity and that include same TCP acknowledgement numbers, it is determined that TCP data packets corresponding to the same TCP acknowledgement numbers are TCP retransmission data packets.

The specified quantity may be 4.

In this embodiment of the present invention, if the network device determines that the probability that the TCP data packet sent to the terminal device is a TCP retransmission data packet is greater than the specified second threshold, further optimization processing may be performed in the following manners on a data transmission method using the TCP quick acknowledgement scheme:
First manner: Measures of improving a sending priority of a TCP retransmission data packet, improving transmission reliability, and the like are taken to ensure that a TCP retransmission data packet can be transmitted accurately and rapidly and avoid that a TCP retransmission data packet fails to be sent to cause retransmission upon timeout to enter TCP slow start.
Second manner: When processing at an RLC layer has a high priority, a logic channel having a relatively high priority may be reserved and used to transmit a recognized TCP retransmission data packet.
Third manner: When transmission blocks are organized at a MAC layer, it is preferentially selected to transmit a recognized TCP retransmission data packet.

H: When the network device determines that a proportion of current TCP acknowledgement packets in a total uplink throughput is greater than a specified threshold, in this case, use of the TCP quick acknowledgement scheme has a significant gain. Therefore, it may be determined that the TCP quick acknowledgement scheme needs to be used, and the activation instruction information used to instruct to enable the TCP quick acknowledgement function is determined.

In this embodiment of the present invention, the network device may determine, based on any one or a combination of the following conditions, that the TCP quick acknowledgement scheme does not need to be used, and the activation instruction information used to instruct to disable the TCP quick acknowledgement function is determined:
A: The network device determines that an uplink transmission rate of sending data by a terminal device is greater than a specified third threshold.
   The third threshold in this embodiment of the present invention may be the same as or different from the foregoing first threshold.
B: The network device does not have a computing processing capability supporting the TCP quick acknowledgement function.
C: The terminal device has enabled a hotspot sharing function.
D: A TCP link of the terminal device is broken.
E: The terminal device has left a current cell or base station.
F: A TCP link established by the terminal device supports TCP link capability information. The TCP link capability information includes selective acknowledgement capability information, duplicate acknowledgement capability information, or timestamp capability information.

It should be noted that this embodiment of the present invention is described by using an example in which the network device determines whether the TCP quick acknowledgement scheme needs to be used. During actual implementation, the terminal device may alternatively determine whether the foregoing condition of enabling or disabling the TCP quick acknowledgement function is satisfied, and report a determined result to the network device, so that the network device determines, based on the result that is determined by the terminal device and that is of enabling or disabling the TCP quick acknowledgement function, the activation instruction information used to instruct to enable or disable the TCP quick acknowledgement function.

S102: The network device sends the activation instruction information.

In this embodiment of the present invention, after determining the activation instruction information used to instruct to enable or disable the TCP quick acknowledgement function, the network device may send the determined activation instruction information to the terminal device.

In this embodiment of the present invention, if the determined activation instruction information is to enable the TCP quick acknowledgement function, the network device maintains a mapping relationship between a TCP sequence number and an RLC PDU sequence number, to implement the TCP quick acknowledgement scheme.

Optionally, in this embodiment of the present invention, if the determined activation instruction information is to disable the TCP quick acknowledgement function, the network device stops maintaining the mapping relationship between a TCP sequence number and an RLC PDU sequence number, thereby reducing processing overheads of the network device.

Optionally, the activation instruction information may be used to enable or disable a TCP quick acknowledgement function of at least one radio bearer or used to enable or disable a TCP quick acknowledgement function of at least one TCP link.

S103: The terminal device receives the activation instruction information, and enables or disables the TCP quick acknowledgement function according to the activation instruction information.

In this embodiment of the present invention, the terminal device receives the activation instruction information, and may enable or disable a TCP quick acknowledgement function of at least one radio bearer or enable or disable a TCP quick acknowledgement function of at least one TCP link based on content indicated by the activation instruction information.

In this embodiment of the present invention, the network device sends the activation instruction information for enabling or disabling the TCP quick acknowledgement function to the terminal device, to enable the terminal device to dynamically enable or disable the TCP quick acknowledgement function, so that the TCP quick acknowledgement function can be enabled when the TCP quick acknowledgement scheme needs to be used (for example, when the terminal device is located in a weak coverage area and has a relatively low uplink transmission rate), and the TCP quick acknowledgement function can be disabled when the TCP quick acknowledgement scheme does not need to be used (for example, the computing processing capability of the network device does not support the TCP quick acknowledgement function), thereby optimizing a data transmission method using the TCP quick acknowledgement scheme.

The data transmission method with the TCP quick acknowledgement function enabled or disabled in the foregoing embodiments is described by combining actual application in the following embodiments of the present invention.

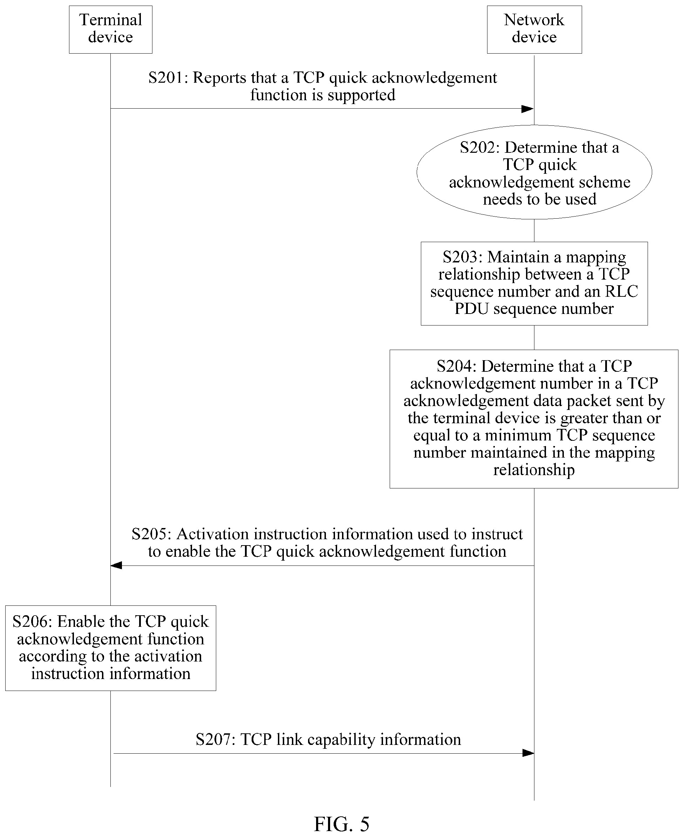

FIG. 5 is a flowchart of a data transmission method with a TCP quick acknowledgement function enabled according to an embodiment of the present invention. As shown in FIG. 5, the data transmission method with the TCP quick acknowledgement function enabled includes the following steps:

S201: A terminal device reports, to a network device, that the terminal device supports a TCP quick acknowledgement function.

S201 in this embodiment of the present invention is an optional step.

S202: The network device determines that a TCP quick acknowledgement scheme needs to be used.

In this embodiment of the present invention, it may be determined, according to a method for determining that the TCP quick acknowledgement scheme needs to be used in the foregoing embodiments, that the TCP quick acknowledgement scheme needs to be used. Details are not described herein again.

S203: The network device maintains a mapping relationship between a TCP sequence number and an RLC PDU sequence number, and listens to a message of a TCP acknowledgement data packet from the terminal device.

Optionally, in this embodiment of the present invention, the mapping relationship maintained by the network device further includes, in addition to a TCP sequence number and an RLC PDU sequence number, at least one of the following: a port number of a transmit end of a TCP data packet, a port number of a receive end of the TCP data packet, an IP address of the transmit end of the TCP data packet, an IP address of the receive end of the TCP data packet, and a length of a TCP packet. For example, the mapping relationship maintained in this embodiment of the present invention may be shown in Table 1.

**Table 1**

| TCP (source IP address, destination IP address, source port, and destination port) | TCP sequence number | RLC PDU sequence number (min SN to max SN) | TCP packet length |
|---|---|---|---|
| Source IP address: 00.72.213.243 | 12 | 11 | 1380 |
| Destination IP address: 202.96.128.86 | | | |
| Source port number: 80 | | | |
| Destination number: 80 | | | |

S204: The network device determines that a TCP acknowledgement number in a TCP acknowledgement data packet sent by the terminal device is greater than or equal to a minimum TCP sequence number maintained in the mapping relationship.

Before determining that the TCP quick acknowledgement scheme needs to be used, the network device needs to first maintain the mapping relationship between a TCP sequence number and an RLC PDU sequence number required for data transmission using the TCP quick acknowledgement scheme. However, the network device cannot determine TCP sequence numbers of TCP acknowledgement data packets that have been correctly received by the terminal device. An acknowledgement number in a TCP acknowledgement data packet is used to represent a packet segment that is expected to be received. That is, all packets before the expected value is reached have been correctly received. Therefore, after preparing to maintain the mapping relationship between a TCP sequence number and an RLC PDU sequence number, the network device needs to listen to a TCP acknowledgement number in a TCP acknowledgement data packet sent by the terminal device. When it is determined that a TCP acknowledgement number in a TCP acknowledgement data packet sent by the terminal device is greater than or equal to a minimum TCP sequence number maintained in the mapping relationship, the network device sends, to the terminal device, activation instruction information that is used to instruct to enable the TCP quick acknowledgement function.

It should be noted that S204 in this embodiment of the present invention is an optional step.

S205: The network device sends, to the terminal device, the activation instruction information used to instruct the terminal device to enable the TCP quick acknowledgement function.

In this embodiment of the present invention, the network device may send the activation instruction information by using at least one or a combination of a Radio Resource Control (Radio Resource Control, RRC) message, a broadcast message, a MAC control element (MAC Control Element, MAC CE), and physical layer signaling.

In this embodiment of the present invention, the activation instruction information may be used to instruct to enable a TCP quick acknowledgement function of at least one radio bearer; or may be used to instruct to enable a TCP quick acknowledgement function of at least one TCP link.

S206: The terminal device receives the activation instruction information used to instruct the terminal device to enable the TCP quick acknowledgement function, and enables the TCP quick acknowledgement function according to the activation instruction information.

In this embodiment of the present invention, the terminal device may enable, based on an enable range indicated by the activation instruction information, the TCP quick acknowledgement function in the enable range. The enable range may be at least one radio bearer or may be at least one TCP link.

S207: The network device obtains TCP link capability information of the terminal device, constructs a TCP acknowledgement data packet based on the TCP link capability information, and performs data transmission by using the TCP quick acknowledgement scheme.

In this embodiment of the present invention, the terminal device may report TCP link information in the enable range. The TCP link information includes whether TCP link capability information such as selective acknowledgement capability information, duplicate acknowledgement capability information, and timestamp capability information is supported.

In this embodiment of the present invention, the network device may alternatively obtain the TCP link capability information by using a TCP link setup packet used when the terminal device establishes a TCP link.

An execution time for the network device to obtain the TCP link capability information of the terminal device is not limited in this embodiment of the present invention. For example, the network device may obtain the TCP link capability information of the terminal device when determining whether the TCP quick acknowledgement scheme needs to be used, to determine the activation instruction information used to instruct to enable or disable the TCP quick acknowledgement function. The network device may alternatively obtain TCP link capability information of the terminal device when constructing a TCP acknowledgement data packet, to determine, when constructing the TCP acknowledgement data packet, whether to construct selective acknowledgement capability information, duplicate acknowledgement capability information, timestamp capability information, and the like.

S207 in this embodiment of the present invention is an optional step.

In this embodiment of the present invention, by using the foregoing data transmission method with the TCP quick acknowledgement function enabled, the TCP quick acknowledgement function may be enabled when the TCP quick acknowledgement scheme needs to be used, so that the data transmission method using the TCP quick acknowledgement scheme can be optimized.

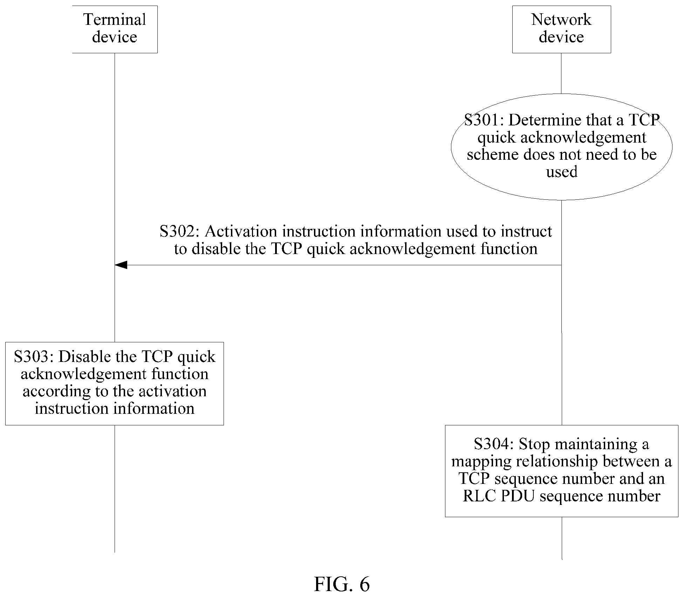

FIG. 6 is a flowchart of a data transmission method with a TCP quick acknowledgement function disabled according to an embodiment of the present invention. As shown in FIG. 6, the data transmission method with the TCP quick acknowledgement function disabled includes the following steps.

S301: A network device determines that a TCP quick acknowledgement scheme does not need to be used.

In this embodiment of the present invention, it may be determined, based on a method for determining that the TCP quick acknowledgement scheme does not need to be used in the foregoing embodiments, that the TCP quick acknowledgement scheme does not need to be used. Details are not described herein again.

S302: The network device sends, to a terminal device, activation instruction information used to instruct the terminal device to disable the TCP quick acknowledgement function.

In this embodiment of the present invention, the network device may send the activation instruction information by using at least one or a combination of a Radio Resource Control (Radio Resource Control, RRC) message, a broadcast message, a MAC control element (MAC Control Element, MAC CE), and physical layer signaling.

In this embodiment of the present invention, the activation instruction information may be used to instruct to disable a TCP quick acknowledgement function of at least one radio bearer; or used to instruct to disable a TCP quick acknowledgement function of at least one TCP link.

S303: The terminal device receives the activation instruction information used to instruct the terminal device to disable the TCP quick acknowledgement function, and disables the TCP quick acknowledgement function according to the activation instruction information.

In this embodiment of the present invention, the terminal device may disable, based on a disable range indicated by the activation instruction information, the TCP quick acknowledgement function in the disable range. The disable range may be at least one radio bearer or may be at least one TCP link.

S304: The network device stops maintaining a mapping relationship between a TCP sequence number and an RLC PDU sequence number.

S304 in this embodiment of the present invention is an optional step.

In this embodiment of the present invention, by using the foregoing data transmission method with the TCP quick acknowledgement function disabled, the TCP quick acknowledgement function may be disabled when the TCP quick acknowledgement scheme does not need to be used, thereby optimizing a data transmission method using the TCP quick acknowledgement scheme.

In the following embodiments of the present invention, a process of performing data transmission by applying the foregoing enabled or disabled TCP quick acknowledgement function is described by using an example in which the terminal device is in a cell handover process.

In this embodiment of the present invention, a TCP quick acknowledgement function may be enabled or disabled in a source cell and a target cell based on whether the source cell and the target cell support the TCP quick acknowledgement function during cell handover of the terminal device. If the source cell supports the TCP quick acknowledgement function but the target cell does not support the TCP quick acknowledgement function, the TCP quick acknowledgement function may be disabled in the source cell, and the TCP quick acknowledgement function may be disabled in the target cell. If both the source cell and the target cell support the TCP quick acknowledgement function, the TCP quick acknowledgement function may be disabled in the source cell, and the TCP quick acknowledgement function may be enabled in the target cell. If the source cell does not support the TCP quick acknowledgement function but the target cell supports the TCP quick acknowledgement function, the TCP quick acknowledgement function may be disabled in the source cell, and the TCP quick acknowledgement function may be enabled in the target cell.

Both an explicit manner and an implicit manner may be used in this embodiment of the present invention. For example, when the terminal device has left the source cell, the TCP quick acknowledgement function is disabled implicitly.

Further, in this embodiment of the present invention, the terminal device may not disable the TCP quick acknowledgement function during cell handover. During handover, when determining that the target cell also supports the TCP quick acknowledgement function, a source network device that belongs to the source cell sends capability information indicating that the terminal device supports the TCP quick acknowledgement function to a target network device that belongs to the target cell, so that the target network device constructs a TCP acknowledgement data packet. During data transmission using the TCP quick acknowledgement scheme, it is convenient for the target network device that belongs to the target cell to establish and maintain the mapping relationship between a TCP sequence number and an RLC PDU sequence number, thereby implementing seamless migration of the TCP quick acknowledgement function.

Optionally, while the network device of the source cell sends the capability information indicating that the terminal device supports the TCP quick acknowledgement function to the target network device that belongs to the target cell, the network device of the target cell may be informed of information such as a TCP acknowledgement number and a selective acknowledgement number constructed by the source cell, so that the target cell can enable the TCP quick acknowledgement function as soon as possible, thereby implementing seamless migration of the TCP quick acknowledgement function.

It should be noted that the drawing in this embodiment of the present invention is merely schematic description but does not limit an order of performing the steps. For example, in FIG. 5, S207 may be performed after S206 or may be performed before S202.

It should further be noted that the terms such as "first" and "second" in the specification, the claims, and the accompanying drawings of the embodiments of the present invention are used only to differentiate similar objects, but do not describe a specific relationship or sequence. For example, in this embodiment of the present invention, the first threshold and the second threshold used in the foregoing are used only for ease of description and differentiate different thresholds, but do not constitute limitations on thresholds. It should be understood that the data used in such a way are interchangeable in proper circumstances so that the embodiments of the present invention described herein can be implemented in other orders than the order illustrated or described herein.

The solutions provided in the embodiments of the present invention are mainly described in the foregoing from the perspective of interaction between the terminal device and the network device. It may be understood that the terminal device and the network device include corresponding hardware structures and/or software modules for executing various functions to implement the foregoing functions. With reference to examples of units, algorithms and steps described in the embodiments disclosed in the present invention, the embodiments of the present invention can be implemented by hardware or hardware combining with computer software. Whether a function is performed by hardware or hardware driven by computer software depends on particular applications and design constraints of the technical solutions. Persons skilled in the art can use different methods to implement the described functions for each particular application, but it should not be considered that the implementation exceeds the scope of the technical solutions in the embodiments of the present invention.

In this embodiment of the present invention, division of functional units may be performed on the terminal device and the network device according to the foregoing examples of methods. For example, various functional units may correspond to various functions, or two or more functions may be integrated in one processing unit. The integrated unit may be implemented in a form of hardware, or may be implemented in a form of a software functional unit. It should be noted that the unit division in the embodiments of the present invention is an example and is merely logical function division. There may be another division manner in an actual implementation.

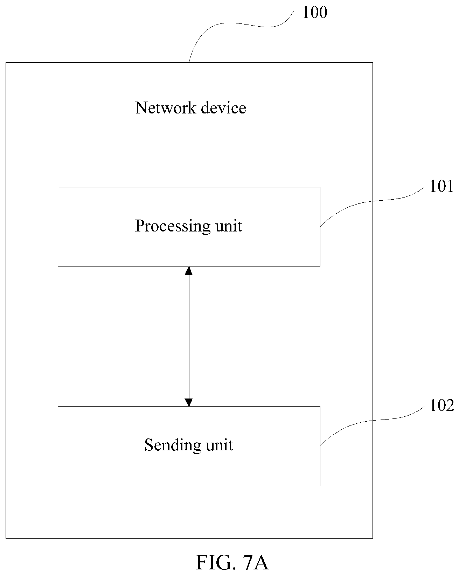

If integrated units are used, FIG. 7A is a schematic structural diagram of a network device 100 according to an embodiment of the present invention. The network device 100 includes a processing unit 101 and a sending unit 102. The processing unit 101 is configured to: determine activation instruction information, where the activation instruction information is used to instruct to enable or disable a transmission control protocol (TCP) quick acknowledgement function, and if the activation instruction information instructs to enable the TCP quick acknowledgement function, maintain a mapping relationship between a TCP sequence number and a radio link control layer protocol data unit (RLC PDU) sequence number. The sending unit 102 is configured to send the activation instruction information determined by the processing unit 101.

The processing unit 101 determines, if it is determined that any one or a combination of the following cases exists, the activation instruction information used to instruct to enable the TCP quick acknowledgement function:
it is determined that an uplink transmission rate of a terminal device is less than a specified first threshold; the network device 100 has a computing processing capability supporting the TCP quick acknowledgement function; the terminal device has not enabled a hotspot sharing function; a TCP link of the terminal device does not support TCP link capability information, where the TCP link capability information includes selective acknowledgement capability information, duplicate acknowledgement capability information, or timestamp capability information; the terminal device is in a TCP link setup process; the terminal device uses subscription information in a core network to indicate that the terminal device supports the TCP quick acknowledgement function; and it is determined that a probability that a TCP data packet sent to the terminal device is a TCP retransmission data packet is greater than a specified second threshold.

The processing unit 101 determines, if it is determined that any one or a combination of the following cases exists, the activation instruction information used to instruct to disable the TCP quick acknowledgement function:
it is determined that an uplink transmission rate of sending data by a terminal device is greater than a specified third threshold; the network device 100 does not have a computing processing capability supporting the TCP quick acknowledgement function; the terminal device has enabled a hotspot sharing function; a TCP link of the terminal device is broken; the terminal device has left a source cell or a source base station; and a TCP link established by the terminal device supports TCP link capability information, where the TCP link capability information includes selective acknowledgement capability information, duplicate acknowledgement capability information, or timestamp capability information.

The processing unit 101 is further configured to: recognize the TCP retransmission data packet before it is determined that the probability that the TCP data packet sent to the terminal device is a TCP retransmission data packet is greater than the specified third threshold, where if it is determined that a disordered TCP sequence number exists in maintained TCP sequence numbers, it is determined that a TCP data packet corresponding to the disordered TCP sequence number is a TCP retransmission data packet, where the maintained TCP sequence numbers are TCP sequence numbers of TCP data packets that are sent by the network device 100 to the terminal device and that are in each TCP link; or, if it is determined that the network device 100 receives TCP acknowledgement data packets whose quantity is greater than or equal to a specified quantity and that include same TCP acknowledgement numbers, it is determined that TCP data packets corresponding to the same TCP acknowledgement numbers are TCP retransmission data packets.

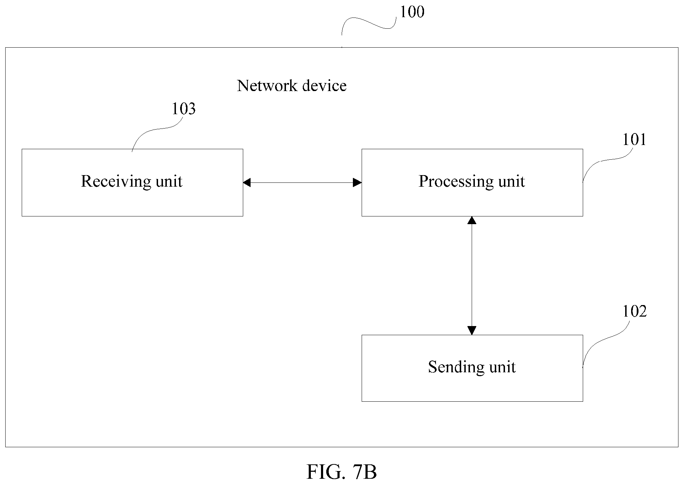

The network device 100 further includes a receiving unit 103, as shown in FIG. 7B. The receiving unit 103 is configured to obtain TCP link capability information of the terminal device, where the TCP link capability information is used to determine the activation instruction information, or used to construct a TCP acknowledgement data packet if the activation instruction information instructs to enable the TCP quick acknowledgement function.

The receiving unit 103 may obtain the TCP link capability information in the following manners:
the TCP link capability information sent by the terminal device is received; or the TCP link capability information is obtained by using a TCP link setup packet used when the terminal device establishes a TCP link.

The processing unit 101 is further configured to: before the sending unit 102 sends the activation instruction information, determine that a TCP acknowledgement number in a TCP acknowledgement data packet sent by the terminal device is greater than or equal to a minimum TCP sequence number maintained in the mapping relationship.

If the activation instruction information instructs to enable the TCP quick acknowledgement function, the mapping relationship maintained by the network device 100 further includes at least one of the following: a port number of a transmit end of a TCP data packet, a port number of a receive end of the TCP data packet, an IP address of the transmit end of the TCP data packet, an IP address of the receive end of the TCP data packet, and a length of a TCP packet.

The activation instruction information is used to enable or disable a TCP quick acknowledgement function of at least one radio bearer; or, the activation instruction information is used to enable or disable a TCP quick acknowledgement function of at least one TCP link.

The sending unit 102 sends the activation instruction information by using at least one or a combination of an RRC message, a broadcast message, a MAC CE, and physical layer signaling.

During implementation in a hardware form, in this embodiment of the present invention, the processing unit 101 may be a processor or a controller. The sending unit 102 may be a communications interface, a transceiver, a transceiver circuit, and the like. The communications interface is a general name and may include one or more interfaces.

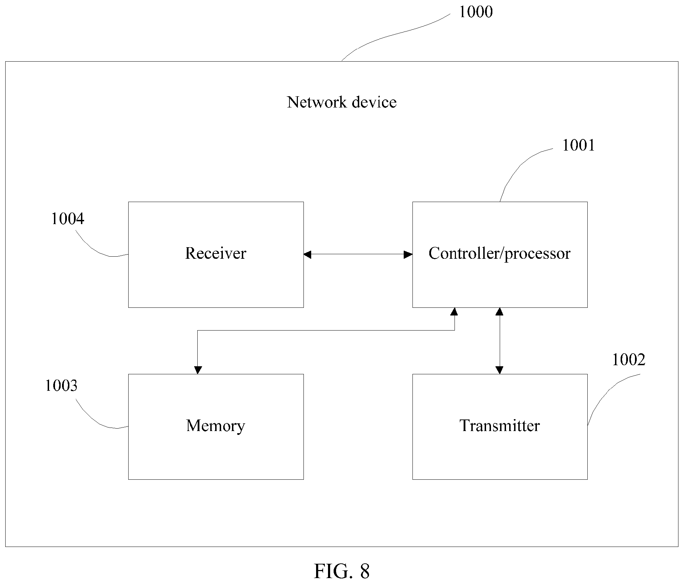

When the processing unit 101 is a processor and the sending unit 102 is a transmitter, the network device 100 used in this embodiment of the present invention may be a network device shown in FIG. 8. The network device shown in FIG. 8 may be a base station.

FIG. 8 a schematic structural diagram of a network device 1000 according to an embodiment of the present invention, that is, is a schematic structural diagram of another possible network device used in this embodiment of the present invention. Referring to FIG. 8, the network device 1000 includes a processor 1001 and a transmitter 1002. The processor 1001 may alternatively be a controller, and is represented as the "controller/processor 1001" in FIG. 8. The processor 1001 is configured to support the network device in executing the functions of the network device used in the foregoing data transmission method. The transmitter 1002 is configured to support the network device in performing the function of transmitting the determined activation instruction information. The network device may further include a memory 1003. The memory 1003 is configured to couple to the processor 1001 and store a necessary program instruction and necessary data of the network device.

In this embodiment of the present invention, the processor 1001 invokes a program stored in the memory 1003 to implement the following functions:

The processor 1001 is configured to: determine activation instruction information, where the activation instruction information is used to instruct to enable or disable a transmission control protocol (TCP) quick acknowledgement function, and if the activation instruction information instructs to enable the TCP quick acknowledgement function, maintain a mapping relationship between a TCP sequence number and a radio link control layer protocol data unit (RLC PDU) sequence number. The transmitter 1002 is configured to send the activation instruction information determined by the processor 1001.

The processor 1001 determines, if it is determined that any one or a combination of the following cases exists, the activation instruction information used to instruct to enable the TCP quick acknowledgement function: it is determined that an uplink transmission rate of a terminal device is less than a specified first threshold; the network device has a computing processing capability supporting the TCP quick acknowledgement function; the terminal device has not enabled a hotspot sharing function; a TCP link of the terminal device does not support TCP link capability information, where the TCP link capability information includes selective acknowledgement capability information, duplicate acknowledgement capability information, or timestamp capability information; the terminal device is in a TCP link setup process; the terminal device uses subscription information in a core network to indicate that the terminal device supports the TCP quick acknowledgement function; and it is determined that a probability that a TCP data packet sent to the terminal device is a TCP retransmission data packet is greater than a specified second threshold.

The processor 1001 determines, if it is determined that any one or a combination of the following cases exists, the activation instruction information used to instruct to disable the TCP quick acknowledgement function: it is determined that an uplink transmission rate of sending data by a terminal device is greater than a specified third threshold; the network device does not have a computing processing capability supporting the TCP quick acknowledgement function; the terminal device has enabled a hotspot sharing function; a TCP link of the terminal device is broken; the terminal device has left a source cell or a source base station; and a TCP link established by the terminal device supports TCP link capability information, where the TCP link capability information includes selective acknowledgement capability information, duplicate acknowledgement capability information, or timestamp capability information.

The processor 1001 is further configured to: recognize the TCP retransmission data packet before it is determined that the probability that the TCP data packet sent to the terminal device is a TCP retransmission data packet is greater than the specified third threshold, where if it is determined that a disordered TCP sequence number exists in maintained TCP sequence numbers, it is determined that a TCP data packet corresponding to the disordered TCP sequence number is a TCP retransmission data packet, where the maintained TCP sequence numbers are TCP sequence numbers of TCP data packets that are sent by the network device to the terminal device and that are in each TCP link; or if it is determined that the network device receives TCP acknowledgement data packets whose quantity is greater than or equal to a specified quantity and that include same TCP acknowledgement numbers, it is determined that TCP data packets corresponding to the same TCP acknowledgement numbers are TCP retransmission data packets.

The network device further includes a receiver 1004. The receiver 1004 is configured to obtain TCP link capability information of the terminal device, where the TCP link capability information is used to determine the activation instruction information, or used to construct a TCP acknowledgement data packet if the activation instruction information instructs to enable the TCP quick acknowledgement function.

The receiver 1004 obtains the TCP link capability information in the following manners: the TCP link capability information sent by the terminal device is received; or the TCP link capability information is obtained by using a TCP link setup packet used when the terminal device establishes a TCP link.

The processor 1001 is further configured to: before the transmitter 1002 sends the activation instruction information, determine that a TCP acknowledgement number in a TCP acknowledgement data packet sent by the terminal device is greater than or equal to a minimum TCP sequence number maintained in the mapping relationship.

If the activation instruction information instructs to enable the TCP quick acknowledgement function, the mapping relationship maintained by the network device further includes at least one of the following: a port number of a transmit end of a TCP data packet, a port number of a receive end of the TCP data packet, an IP address of the transmit end of the TCP data packet, an IP address of the receive end of the TCP data packet, and a length of a TCP packet.

The activation instruction information is used to enable or disable a TCP quick acknowledgement function of at least one radio bearer; or, the activation instruction information is used to enable or disable a TCP quick acknowledgement function of at least one TCP link.

The transmitter 1002 may send the activation instruction information by using at least one or a combination of an RRC message, a broadcast message, a MAC CE, and physical layer signaling.

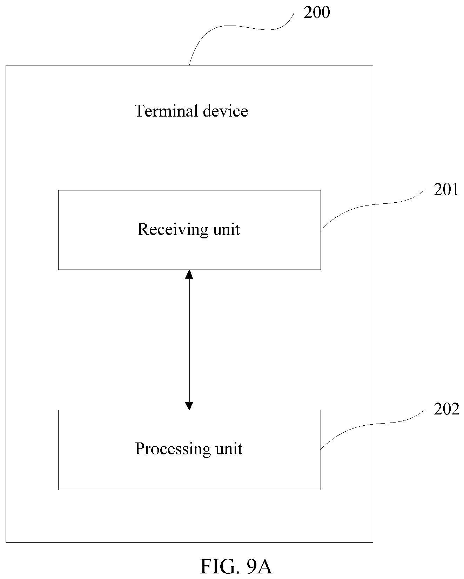

If integrated units are used, FIG. 9A is a schematic structural diagram of a terminal device 200 according to an embodiment of the present invention. Referring to FIG. 9A, the terminal device includes a receiving unit 201 and a processing unit 202. The receiving unit 201 is configured to receive activation instruction information sent by a network device, where the activation instruction information is used to instruct to enable or disable a transmission control protocol (TCP) quick acknowledgement function. The processing unit 202 is configured to enable or disable the TCP quick acknowledgement function according to the activation instruction information received by the receiving unit 201.

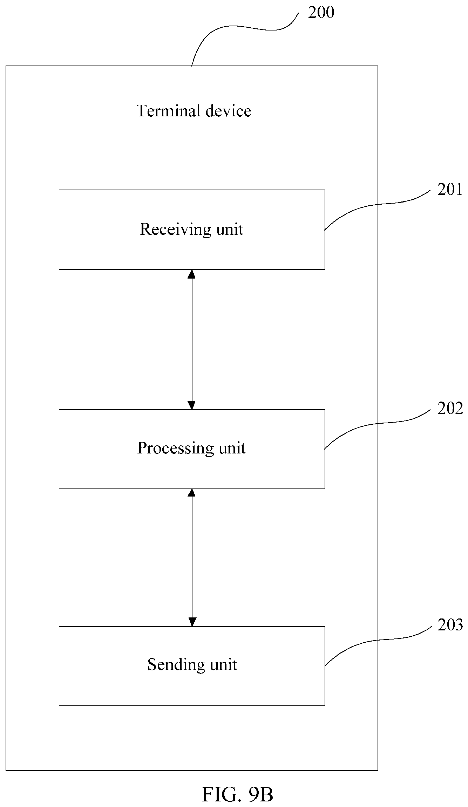

The terminal device further includes a sending unit 203, as shown in FIG. 9B. The sending unit 203 is configured to: after the receiving unit 201 receives activation instruction information sent by the network device, if the processing unit 202 determines, according to the activation instruction information, to enable the TCP quick acknowledgement function, send TCP link capability information to the network device. The TCP link capability information includes selective acknowledgement capability information, duplicate acknowledgement capability information, or timestamp capability information.

The receiving unit 201 receives, by using at least one or a combination of an RRC message, a broadcast message, a MAC CE, and physical layer signaling, the activation instruction information sent by the network device.

The activation instruction information is used to enable or disable a TCP quick acknowledgement function of at least one radio bearer; or, the activation instruction information is used to enable or disable a TCP quick acknowledgement function of at least one TCP link.

During implementation in a hardware form, in this embodiment of the present invention, the processing unit 202 may be a processor or a controller. The receiving unit 201 may be a communications interface, a transceiver, a transceiver circuit, and the like. The communications interface is a general name and may include one or more interfaces.

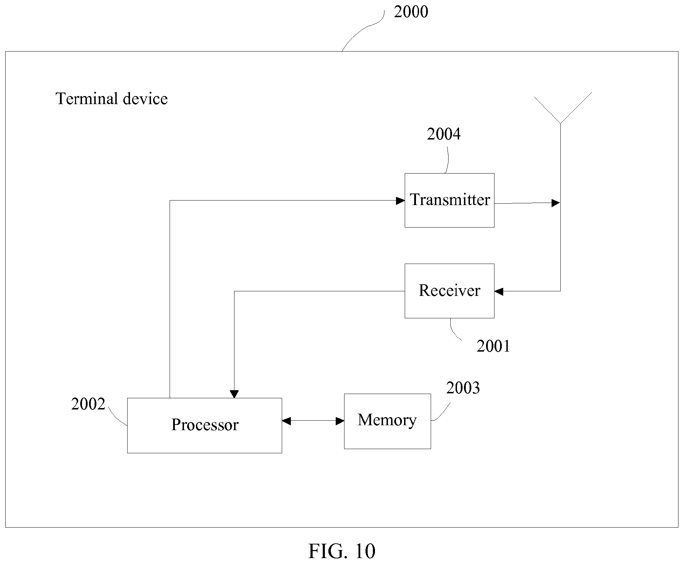

When the processing unit 202 is a processor and the receiving unit 201 is a receiver, the terminal device 200 used in this embodiment of the present invention may be a terminal device shown in FIG. 10.

FIG. 10 is a schematic structural diagram of a terminal device 2000 according to an embodiment of the present invention, that is, is another schematic structural diagram of the terminal device provided in this embodiment of the present invention. Referring to FIG. 10, the terminal device 2000 includes a receiver 2001 and a processor 2002. The receiver 2001 is configured to support the terminal device in receiving activation instruction information transmitted by a network device. The processor 2002 is configured to support the terminal device in executing the functions of the terminal device used in the foregoing data transmission method. The terminal device may further include a memory 2003. The memory 2003 is configured to couple to the processor 2002 and store a necessary program instruction and necessary data of the terminal device.

In this embodiment of the present invention, the receiver 2001 is configured to receive activation instruction information sent by a network device, where the activation instruction information is used to instruct to enable or disable a transmission control protocol (TCP) quick acknowledgement function. The processor 2002 is configured to enable or disable the TCP quick acknowledgement function according to the activation instruction information received by the receiver.

The terminal device further includes a transmitter 2004. The transmitter 2004 is configured to: after the receiver 2001 receives the activation instruction information sent by the network device, if the processor 2002 determines, according to the activation instruction information, to enable the TCP quick acknowledgement function, send TCP link capability information to the network device. The TCP link capability information includes selective acknowledgement capability information, duplicate acknowledgement capability information, or timestamp capability information.

The receiver 1001 receives, by using at least one or a combination of an RRC message, a broadcast message, a MAC CE, and physical layer signaling, the activation instruction information sent by the network device.

The activation instruction information is used to enable or disable a TCP quick acknowledgement function of at least one radio bearer; or, the activation instruction information is used to enable or disable a TCP quick acknowledgement function of at least one TCP link.

It may be understood that, only simplified designs of the network device and the terminal device are shown in the accompanying drawings of the embodiments of the present invention. During actual application, the network device and the terminal device are not limited to the foregoing structures. For example, the terminal device may further include a display device, an input/output interface, and the like. All terminal devices that can implement the embodiments of the present invention fall within the protection scope of the embodiments of the present invention. The network device may further include any quantity of transmitters, receivers, processors, controllers, memories, communication units, and the like. All network devices that can implement the embodiments of the present invention fall within the protection scope of the embodiments of the present invention.

It may further be understood that the terminal device and the network device used in the embodiments of the present invention may be configured to implement corresponding functions of the terminal device and the network device in the foregoing method embodiments of the embodiments of the present invention. Therefore, for content that is not thoroughly described in the embodiments of the present invention, refer to the description of the related method embodiments. Details are not described herein again in the embodiments of the present invention.

It should be noted that the processor or controller in the embodiments of the present invention may be a central processing unit (Central Processing Unit, CPU), a general-purpose processor, a digital signal processor (Digital Signal Processor, DSP), an application-specific integrated circuit (Application Specific Integrated Circuit, ASIC), a field programmable gate array (Field-Programmable Gate Array, FPGA), or another programmable logical device, a transistor logical device, a hardware component, or a combination thereof. The controller/processor may implement or execute various example logical blocks, modules and circuits described with reference to content disclosed in the present invention. Alternatively, the processor may be a combination of processors implementing a computing function, for example, a combination of one or more microprocessors, or a combination of the DSP and a microprocessor.

Persons of ordinary skill in the art may understand that all or some of the steps in each of the foregoing method of the embodiments may be implemented by a program instructing a processor. The foregoing program may be stored in a computer readable storage medium. The storage medium may be a non-transitory (non-transitory) medium, such as a random-access memory, a read-only memory, a flash memory, a hard disk, a solid state drive, a magnetic tape (magnetic tape), a floppy disk (floppy disk), an optical disc (optical disc), or any combination thereof.

The present invention is described with reference to flowcharts and block diagrams of the method and the device in the embodiments of the present invention. It should be understood that computer program instructions may be used to implement each process and each block in the flowcharts and the block diagrams and a combination of a process and a block in the flowcharts and the block diagrams. These computer program instructions may be provided for a general-purpose computer, a dedicated computer, an embedded processor, or a processor of any other programmable data processing device to generate a machine, so that the instructions executed by a computer or a processor of any other programmable data processing device generate an apparatus for implementing a specific function in one or more processes in the flowcharts or in one or more blocks in the block diagrams.

The foregoing descriptions are merely example implementation manners of the present invention, but are not intended to limit the protection scope of the present invention. Any variation or replacement readily figured out by persons skilled in the art within the technical scope disclosed in the present invention shall fall within the protection scope of the present invention. Therefore, the protection scope of the present invention shall be subject to the protection scope of the claims.

## Claims

1. A data transmission method, comprising:
determining, by a network device, activation instruction information, wherein the activation instruction information is used to instruct to enable or disable a transmission control protocol (TCP) quick acknowledgement function; and
sending, by the network device, the activation instruction information, and if the activation instruction information instructs to enable the TCP quick acknowledgement function, maintaining a mapping relationship between a TCP sequence number and a radio link control layer protocol data unit (RLC PDU) sequence number.

2. The method according to claim 1, wherein the determining, by a network device, activation instruction information used to instruct to enable a TCP quick acknowledgement function comprises:
determining, by the network device if it is determined that any one or a combination of the following cases exists, the activation instruction information used to instruct to enable the TCP quick acknowledgement function:
the network device determines that an uplink transmission rate of a terminal device is less than a specified first threshold;
the network device has a computing processing capability supporting the TCP quick acknowledgement function;
the terminal device has not enabled a hotspot sharing function;
a TCP link of the terminal device does not support TCP link capability information, wherein the TCP link capability information comprises selective acknowledgement capability information, duplicate acknowledgement capability information, or timestamp capability information;
the terminal device is in a TCP link setup process;
the terminal device uses subscription information in a core network to indicate that the terminal device supports the TCP quick acknowledgement function; and
the network device determines that a probability that a TCP data packet sent to the terminal device is a TCP retransmission data packet is greater than a specified second threshold.

3. The method according to claim 1, wherein the determining, by the network device, the activation instruction information used to instruct to disable the TCP quick acknowledgement function comprises:
determining, by the network device if it is determined that any one or a combination of the following cases exists, the activation instruction information used to instruct to disable the TCP quick acknowledgement function:
the network device determines that an uplink transmission rate of sending data by a terminal device is greater than a specified third threshold;
the network device does not have a computing processing capability supporting the TCP quick acknowledgement function;
the terminal device has enabled a hotspot sharing function;
a TCP link of the terminal device is broken;
the terminal device has left a source cell or a source base station; and
a TCP link established by the terminal device supports TCP link capability information, wherein the TCP link capability information comprises selective acknowledgement capability information, duplicate acknowledgement capability information, or timestamp capability information.

4. The method according to claim 2, wherein before the network device determines that the probability that the TCP data packet sent to the terminal device is the TCP retransmission data packet is greater than the specified third threshold, the method further comprises:
recognizing, by the network device, the TCP retransmission data packet, wherein
if the network device determines that a disordered TCP sequence number exists in maintained TCP sequence numbers, it is determined that a TCP data packet corresponding to the disordered TCP sequence number is a TCP retransmission data packet, wherein the maintained TCP sequence numbers are TCP sequence numbers of TCP data packets that are sent by the network device to the terminal device and that are in each TCP link; or
if the network device receives TCP acknowledgement data packets whose quantity is greater than or equal to a specified quantity and that comprise same TCP acknowledgement numbers, it is determined that TCP data packets corresponding to the same TCP acknowledgement numbers are TCP retransmission data packets.

5. The method according to any one of claims 1 to 4, wherein the method further comprises:
obtaining, by the network device, TCP link capability information of the terminal device, wherein
the TCP link capability information is used to determine the activation instruction information, or used to construct a TCP acknowledgement data packet if the activation instruction information instructs to enable the TCP quick acknowledgement function.

6. The method according to claim 5, wherein the network device obtains the TCP link capability information in the following manners:
the network device receives the TCP link capability information sent by the terminal device; or
the network device obtains the TCP link capability information by using a TCP link setup packet used when the terminal device establishes a TCP link.

7. The method according to any one of claims 1 to 6, wherein before the sending, by the network device, the activation instruction information, the method further comprises:
determining, by the network device, that a TCP acknowledgement number in a TCP acknowledgement data packet sent by the terminal device is greater than or equal to a minimum TCP sequence number maintained in the mapping relationship.

8. The method according to claim 1, wherein if the activation instruction information instructs to enable the TCP quick acknowledgement function, the mapping relationship maintained by the network device further comprises at least one of the following:
a port number of a transmit end of a TCP data packet, a port number of a receive end of the TCP data packet, an IP address of the transmit end of the TCP data packet, an IP address of the receive end of the TCP data packet, and a length of a TCP packet.

9. The method according to any one of claims 1 to 8, wherein the activation instruction information is used to instruct to enable or disable a TCP quick acknowledgement function of at least one radio bearer; or
the activation instruction information is used to instruct to enable or disable a TCP quick acknowledgement function of at least one TCP link.

10. The method according to any one of claims 1 to 9, wherein the network device sends the activation instruction information by using at least one or a combination of a radio resource control (RRC) message, a broadcast message, a media access control (MAC) layer control element (CE), and physical layer signaling.

11. A data transmission method, comprising:
receiving, by a terminal device, activation instruction information sent by a network device, wherein the activation instruction information is used to instruct to enable or disable a transmission control protocol (TCP) quick acknowledgement function; and
enabling or disabling, by the terminal device, the TCP quick acknowledgement function according to the activation instruction information.

12. The method according to claim 11, wherein after the receiving, by the terminal device, the activation instruction information sent by the network device, the method further comprises:
if the terminal device determines, according to the activation instruction information, to enable the TCP quick acknowledgement function, sending, by the terminal device, TCP link capability information to the network device, wherein
the TCP link capability information comprises selective acknowledgement capability information, duplicate acknowledgement capability information, or timestamp capability information.

13. The method according to claim 11 or 12, wherein the terminal device receives, by using at least one or a combination of a radio resource control (RRC) message, a broadcast message, a media access control (MAC) layer control element (CE), and physical layer signaling, the activation instruction information sent by the network device.

14. The method according to any one of claims 11 to 13, wherein the activation instruction information is used to instruct to enable or disable a TCP quick acknowledgement function of at least one radio bearer; or
the activation instruction information is used to instruct to enable or disable a TCP quick acknowledgement function of at least one TCP link.

15. A network device, comprising:
a processing unit, configured to: determine activation instruction information, wherein the activation instruction information is used to instruct to enable or disable a transmission control protocol (TCP) quick acknowledgement function, and if the activation instruction information instructs to enable the TCP quick acknowledgement function, maintain a mapping relationship between a TCP sequence number and a radio link control layer protocol data unit (RLC PDU) sequence number; and
a sending unit, configured to send the activation instruction information determined by the processing unit.

16. The network device according to claim 15, wherein the processing unit determines, in the following manners, the activation instruction information used to instruct to enable the TCP quick acknowledgement function:
if it is determined that any one or a combination of the following cases exists, the activation instruction information used to instruct to enable the TCP quick acknowledgement function is determined:
it is determined that an uplink transmission rate of a terminal device is less than a specified first threshold;
the network device has a computing processing capability supporting the TCP quick acknowledgement function;
the terminal device has not enabled a hotspot sharing function;
a TCP link of the terminal device does not support TCP link capability information, wherein the TCP link capability information comprises selective acknowledgement capability information, duplicate acknowledgement capability information, or timestamp capability information;
the terminal device is in a TCP link setup process;
the terminal device uses subscription information in a core network to indicate that the terminal device supports the TCP quick acknowledgement function; and
it is determined that a probability that a TCP data packet sent to the terminal device is a TCP retransmission data packet is greater than a specified second threshold.

17. The network device according to claim 15, wherein the processing unit determines, in the following manners, the activation instruction information used to instruct to disable the TCP quick acknowledgement function:
if it is determined that any one or a combination of the following cases exists, the activation instruction information used to instruct to disable the TCP quick acknowledgement function is determined:
it is determined that an uplink transmission rate of sending data by a terminal device is greater than a specified third threshold;
the network device does not have a computing processing capability supporting the TCP quick acknowledgement function;
the terminal device has enabled a hotspot sharing function;
a TCP link of the terminal device is broken;
the terminal device has left a source cell or a source base station; and
a TCP link established by the terminal device supports TCP link capability information, wherein the TCP link capability information comprises selective acknowledgement capability information, duplicate acknowledgement capability information, or timestamp capability information.

18. The network device according to claim 16, wherein the processing unit is further configured to:
recognize the TCP retransmission data packet before it is determined that the probability that the TCP data packet sent to the terminal device is a TCP retransmission data packet is greater than the specified third threshold, wherein
if it is determined that a disordered TCP sequence number exists in maintained TCP sequence numbers, it is determined that a TCP data packet corresponding to the disordered TCP sequence number is a TCP retransmission data packet, wherein the maintained TCP sequence numbers are TCP sequence numbers of TCP data packets that are sent by the network device to the terminal device and that are in each TCP link; or
if it is determined that the network device receives TCP acknowledgement data packets whose quantity is greater than or equal to a specified quantity and that comprise same TCP acknowledgement numbers, it is determined that TCP data packets corresponding to the same TCP acknowledgement numbers are TCP retransmission data packets.

19. The network device according to any one of claims 15 to 18, wherein the network device further comprises a receiving unit, wherein
the receiving unit is configured to obtain TCP link capability information of the terminal device, wherein
the TCP link capability information is used to determine the activation instruction information, or used to construct a TCP acknowledgement data packet if the activation instruction information instructs to enable the TCP quick acknowledgement function.

20. The network device according to claim 19, wherein the receiving unit obtains the TCP link capability information in the following manners:
the TCP link capability information sent by the terminal device is received; or
the TCP link capability information is obtained by using a TCP link setup packet used when the terminal device establishes a TCP link.

21. The network device according to any one of claims 15 to 20, wherein the processing unit is further configured to:
before the sending unit sends the activation instruction information, determine that a TCP acknowledgement number in a TCP acknowledgement data packet sent by the terminal device is greater than or equal to a minimum TCP sequence number maintained in the mapping relationship.

22. The network device according to claim 15, wherein if the activation instruction information instructs to enable the TCP quick acknowledgement function, the mapping relationship maintained by the network device further comprises at least one of the following:
a port number of a transmit end of a TCP data packet, a port number of a receive end of the TCP data packet, an IP address of the transmit end of the TCP data packet, an IP address of the receive end of the TCP data packet, and a length of a TCP packet.

23. The network device according to any one of claims 15 to 22, wherein the activation instruction information is used to enable or disable a TCP quick acknowledgement function of at least one radio bearer; or
the activation instruction information is used to enable or disable a TCP quick acknowledgement function of at least one TCP link.

24. The network device according to any one of claims 15 to 23, wherein the sending unit sends the activation instruction information by using at least one or a combination of a radio resource control (RRC) message, a broadcast message, a media access control (MAC) layer control element (CE), and physical layer signaling.

25. A terminal device, comprising:
a receiving unit, configured to receive activation instruction information sent by a network device, wherein the activation instruction information is used to instruct to enable or disable a transmission control protocol (TCP) quick acknowledgement function; and
a processing unit, configured to enable or disable the TCP quick acknowledgement function according to the activation instruction information received by the receiving unit.

26. The terminal device according to claim 25, wherein the terminal device further comprises a sending unit, wherein
the sending unit is configured to: after the receiving unit receives the activation instruction information sent by the network device, if the processing unit determines, according to the activation instruction information, to enable the TCP quick acknowledgement function, send TCP link capability information to the network device, wherein
the TCP link capability information comprises selective acknowledgement capability information, duplicate acknowledgement capability information, or timestamp capability information.

27. The terminal device according to claim 25 or 26, wherein the receiving unit receives, by using at least one or a combination of a radio resource control (RRC) message, a broadcast message, a media access control (MAC) layer control element (CE), and physical layer signaling, the activation instruction information sent by the network device.

28. The terminal device according to any one of claims 25 to 27, wherein the activation instruction information is used to enable or disable a TCP quick acknowledgement function of at least one radio bearer; or
the activation instruction information is used to enable or disable a TCP quick acknowledgement function of at least one TCP link.

29. A network device, comprising a processor and a transmitter, wherein
the processor is configured to: determine activation instruction information, wherein the activation instruction information is used to instruct to enable or disable a transmission control protocol (TCP) quick acknowledgement function, and if the activation instruction information instructs to enable the TCP quick acknowledgement function, maintain a mapping relationship between a TCP sequence number and a radio link control layer protocol data unit (RLC PDU) sequence number; and
the transmitter is configured to send the activation instruction information determined by the processor.

30. The network device according to claim 29, wherein the processor determines, in the following manners, the activation instruction information used to instruct to enable the TCP quick acknowledgement function:
if it is determined that any one or a combination of the following cases exists, the activation instruction information used to instruct to enable the TCP quick acknowledgement function is determined:
it is determined that an uplink transmission rate of a terminal device is less than a specified first threshold;
the network device has a computing processing capability supporting the TCP quick acknowledgement function;
the terminal device has not enabled a hotspot sharing function;
a TCP link of the terminal device does not support TCP link capability information, wherein the TCP link capability information comprises selective acknowledgement capability information, duplicate acknowledgement capability information, or timestamp capability information;
the terminal device is in a TCP link setup process;
the terminal device uses subscription information in a core network to indicate that the terminal device supports the TCP quick acknowledgement function;
it is determined that a probability that a TCP data packet sent to the terminal device is a TCP retransmission data packet is greater than a specified second threshold.

31. The network device according to claim 29, wherein the processor determines, in the following manners, the activation instruction information used to instruct to disable the TCP quick acknowledgement function:
if it is determined that any one or a combination of the following cases exists, the activation instruction information used to instruct to disable the TCP quick acknowledgement function is determined:
it is determined that an uplink transmission rate of sending data by a terminal device is greater than a specified third threshold;
the network device does not have a computing processing capability supporting the TCP quick acknowledgement function;
the terminal device has enabled a hotspot sharing function;
a TCP link of the terminal device is broken;
the terminal device has left a source cell or a source base station; and
a TCP link established by the terminal device supports TCP link capability information, wherein the TCP link capability information comprises selective acknowledgement capability information, duplicate acknowledgement capability information, or timestamp capability information.

32. The network device according to claim 30, wherein the processor is further configured to:
recognize the TCP retransmission data packet before it is determined that the probability that the TCP data packet sent to the terminal device is a TCP retransmission data packet is greater than the specified third threshold, wherein
if it is determined that a disordered TCP sequence number exists in maintained TCP sequence numbers, it is determined that a TCP data packet corresponding to the disordered TCP sequence number is a TCP retransmission data packet, wherein the maintained TCP sequence numbers are TCP sequence numbers of TCP data packets that are sent by the network device to the terminal device and that are in each TCP link; or
if it is determined that the network device receives TCP acknowledgement data packets whose quantity is greater than or equal to a specified quantity and that comprise same TCP acknowledgement numbers, it is determined that TCP data packets corresponding to the same TCP acknowledgement numbers are TCP retransmission data packets.

33. The network device according to any one of claims 29 to 32, wherein the network device further comprises a receiver, wherein
the receiver is configured to obtain TCP link capability information of the terminal device, wherein
the TCP link capability information is used to determine the activation instruction information, or used to construct a TCP acknowledgement data packet if the activation instruction information instructs to enable the TCP quick acknowledgement function.

34. The network device according to claim 33, wherein the receiver obtains the TCP link capability information in the following manners:
the TCP link capability information sent by the terminal device is received; or
the TCP link capability information is obtained by using a TCP link setup packet used when the terminal device establishes a TCP link.

35. The network device according to any one of claims 29 to 34, wherein the processor is further configured to:
before the transmitter sends the activation instruction information, determine that a TCP acknowledgement number in a TCP acknowledgement data packet sent by the terminal device is greater than or equal to a minimum TCP sequence number maintained in the mapping relationship.

36. The network device according to claim 29, wherein if the activation instruction information instructs to enable the TCP quick acknowledgement function, the mapping relationship maintained by the network device further comprises at least one of the following:
a port number of a transmit end of a TCP data packet, a port number of a receive end of the TCP data packet, an IP address of the transmit end of the TCP data packet, an IP address of the receive end of the TCP data packet, and a length of a TCP packet.

37. The network device according to any one of claims 29 to 36, wherein the activation instruction information is used to enable or disable a TCP quick acknowledgement function of at least one radio bearer; or
the activation instruction information is used to enable or disable a TCP quick acknowledgement function of at least one TCP link.

38. The network device according to any one of claims 29 to 37, wherein the transmitter sends the activation instruction information by using at least one or a combination of a radio resource control (RRC) message, a broadcast message, a media access control (MAC) layer control element (CE), and physical layer signaling.

39. A terminal device, comprising a receiver and a processor, wherein
the receiver is configured to receive activation instruction information sent by a network device, wherein the activation instruction information is used to instruct to enable or disable a transmission control protocol (TCP) quick acknowledgement function; and
the processor is configured to enable or disable the TCP quick acknowledgement function according to the activation instruction information received by the receiver.

40. The terminal device according to claim 39, wherein the terminal device further comprises a transmitter, wherein
the transmitter is configured to: after the receiver receives the activation instruction information sent by the network device, if the processor determines, according to the activation instruction information, to enable the TCP quick acknowledgement function, send TCP link capability information to the network device, wherein
the TCP link capability information comprises selective acknowledgement capability information, duplicate acknowledgement capability information, or timestamp capability information.

41. The terminal device according to claim 39 or 40, wherein the receiver receives, by using at least one or a combination of a radio resource control (RRC) message, a broadcast message, a media access control (MAC) layer control element (CE), and physical layer signaling, the activation instruction information sent by the network device.

42. The terminal device according to any one of claims 39 to 41, wherein the activation instruction information is used to enable or disable a TCP quick acknowledgement function of at least one radio bearer; or
the activation instruction information is used to enable or disable a TCP quick acknowledgement function of at least one TCP link.
